Europäisches Patentamt

European Patent Office

Office européen des brevets

(19)

(11) **EP 1 255 214 A2**

(12) **EUROPEAN PATENT APPLICATION**

(43) Date of publication:
06.11.2002 Bulletin 2002/45

(51) Int Cl.⁷: **G06F 17/60**

(21) Application number: **02009496.7**

(22) Date of filing: **25.04.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **25.04.2001 GB 0110085**

(71) Applicant: **INVENTOR-E LIMITED**
**Edgbaston, Birmingham B16 9PN (GB)**

(72) Inventor: **Henry, Dean**
**Nechels, Birmingham B7 4DS (GB)**

(74) Representative: **Lucking, David John et al**
**FORRESTER & BOEHMERT**
**Pettenkoferstrasse 20-22**
**80336 München (DE)**

(54) **Automatic stock replenishment system**

(57)     A method of determining the performance of a supplier (18, 19) of stock utilising an automatic stock replenishing system (10) of the kind which monitors stock levels in a plurality of stock keeping units (SKU's) (11) and automatically re-orders stock when the stock level falls below a re-order level, the method including storing data relating to the performance of the supplier (18, 19), and applying statistical analysis to the data.

## Description

This invention relates to a method of determining the performance of a supplier, or a plurality of alternative suppliers of stock utilising an automatic stock replenishment system of the kind which monitors stock levels in a plurality of stock keeping units (SKU's) and automatically re-orders stock when the stock level in any SKU falls below a re-order level.

Automatic stock replenishment systems are known from for example previous patent application GB-A-2299704. Such systems automatically monitor stock levels in SKU's containing a plurality of stock items. When the level of stock falls below a re-order level, the system is arranged automatically to place a re-order for the stock with a supplier.

A system operator may have a plurality of alternative suppliers for the same stock items. Accordingly, it is necessary to select one of the alternative suppliers when re-ordering. Such selection may be made on the basis of the price of the stock items, which may or may not include delivery costs, and the perceived efficiency of the supplier in replenishing stocks before the stock is exhausted.

At present the selection of supplier is made manually. The present invention provides a method whereby data may be collected and stored and used in order in a process to select a supplier from whom to re-order stock.

According to one aspect of the invention we provide a method of determining the performance of a supplier of stock utilising an automatic stock replenishment system of the kind which monitors stock levels in a plurality of stock keeping units (SKU's) and automatically re-orders stock when the stock level in any SKU falls below a re-order level, the method including at least one of determining a total number of SKU's with stock levels below the re-order level; and/or determining the time taken for a supplier to replenish the stock level in a SKU with a stock level below the re-order level, subsequent to re-order; and/or where stock levels in a plurality of the SKU's are each below a re-order level, determining how many of the SKU's are replenished at the next delivery of stock items by the supplier; and/or determining the number of SKU's with respective stock levels below a minimum stock level which is lower than the re-order level; and/or determining the time taken for a supplier to replenish the stock level in at least one SKU in which the stock level is below a minimum stock level, which is lower than the re-order level; and/or where stock levels in a plurality of the SKU's are each below a minimum stock level, which is lower than the re-order level, determining how many of the SKU's are replenished at the next delivery of stock items by the supplier; and/or determining how many of the SKU's are out-of-stock; and/or determining the time taken for a supplier to replenish the stock level in at least one SKU which is out-of-stock; and/or where a plurality of the SKU's are each out-of-stock, determining how many of the SKU's are replenished at the next delivery of stock items by the supplier; and/or determining the number of the SKU's which have stock levels above a maximum stock level; and/or where stock in a SKU is rejected, the time taken for a supplier to remove the rejected stock from the SKU or from a quarantine location to which the rejected stock has been moved; and/or where stock is rejected, the number of stock rejections for a particular supplier; and storing data relating to at least one of the above events, and applying statistical analysis to the data.

Thus using the facilities of a stock replenishment system, data may be collected concerning the performance of a plurality of suppliers of stock, and the method may include comparing the performances of the suppliers for particular stock items, and from performance information determined from the statistical analysis, selecting one supplier in preference to another of the suppliers when automatically re-ordering the particular stock items in the future.

As well as enabling supplies of stock items to be obtained from the best supplier, the method may include storing data relating to the rate of stock usage from at least one of the SKU's, so that where it is determined that the rate of usage of stock items from at least one of the SKU's is below a minimum usage level, the supplier of the stock may automatically be instructed to remove at least some of the items of stock to avoid the stock becoming obsolete.

This is important particularly where the stock items are perishable or otherwise require to be used before a particular date.

Similarly, the method may include determining whether the stock level in any of the SKU's is above a maximum level, and in the event that the stock level in any SKU is determined to be above the maximum stock level, the method may include automatically instructing the supplier of the stock to remove at least some of the items of stock.

The method may include storing historical information and predicting future trends of stock use, and then using this information to adjust at least one of the re-order level, the minimum stock level, and the maximum stock level of each SKU depending upon predicted future trends of stock use.

The method may include comparing historic actual and predicted stock us trends, and modifying an algorithm used for predicting future trends of stock use depending on the results of the comparison to improve future stock use prediction.

The method may include advising suppliers of the stock of a changing demand for the stock, so that suppliers may scale down or up their sourcing and/or manufacture of the stock items accordingly.

Further to aid a supplier to whom stock items are returned, the method may include connecting the automatic stock replenishment system to at least one similar stock replenishment system over a network and using data from each of the networked systems to determine the performance of a supplier to each of the systems. In the event that stock is to be returned to a supplier due to a stock level in an SKU of one system being greater than the maximum stock level, the method may include automatically advising the supplier of stock to be returned of the identity of an alternative customer for the returned stock so that the supplier(s) may dispose of the stock to the alternative customer.

Thus for example, where there is a reduced demand for particular stock items from an automatic stock replenishment system, the stock may be transferred to an alternative customer for disposal.

The method may include determining from data from each of the networked systems a general level of stock volatility for a stock item stored by each of the networked systems.

The method may include storing customer sourcing preferences data for the stock and automatically selecting a supplier from whom stock is to be re-ordered with reference to the stored customer data.

Thus the system may automatically re-order stock from a supplier selected with reference to the statistical analysis of the stored data but weighted by customer sourcing preferences such as a cost preference, so that for a less strategically important stock item, this may be re-ordered from a lower performance but cheaper supplier, and higher strategically important stock items may automatically be ordered from a more expensive but higher performance supplier.

The method may includes disabling automatic stock replenishment for one or more selected SKU's whilst continuing to collect data concerning stock usage, in the event for example that a stock line is discontinued or superseded.

The method may include adapting the system to determine when an item is added to any SKU without any re-ordering of stock items for the SKU having been placed by the system. Thus in the event that a supplier re-stocks an incorrect SKU, a warning may be given to permit the error immediately to be remedied.

According to a second aspect of the invention we provide a control apparatus for an automatic stock replenishment system of the kind which monitors stock levels in a plurality of stock keeping units (SKU's) and automatically re-orders stock when the stock level in any SKU falls below a re-order level, the control apparatus being adapted to at least one of determine a total number of SKU's with stock levels below the re-order level; and/or to determine the time taken for a supplier to replenish the stock level in a SKU with a stock level below the re-order level, subsequent to re-order; and/or where stock levels in a plurality of the SKU's are each below a re-order level, to determine how many of the SKU's are replenished at the next delivery of stock items by the supplier; and/or to determine the number of SKU's with respective stock levels below a minimum stock level which is lower than the re-order level; and/or to determine the time taken for a supplier to replenish the stock level in at least one SKU in which the stock level is below a minimum stock level, which is lower than the re-order level; and/or where stock levels in a plurality of the SKU's are each below a minimum stock level, which is lower than the re-order level, to determine how many of the SKU's are replenished at the next delivery of stock items by the supplier; and/or to determine how many of the SKU's are out-of-stock; and/or to determine the time taken for a supplier to replenish the stock level in at least one SKU which is out-of-stock; and/or where a plurality of the SKU's are each out-of-stock, to determine how many of the SKU's are replenished at the next delivery of stock items by the supplier; and/or to determine the number of the SKU's which have stock levels above a maximum stock level; and the apparatus having means for storing data relating to at least one of the above events, and for applying statistical analysis to the data.

According to a third aspect of the invention we provide an automatic stock replenishment system adapted to be operated by the method of the first aspect of the invention and/or controlled by a control apparatus in accordance with the second aspect of the invention

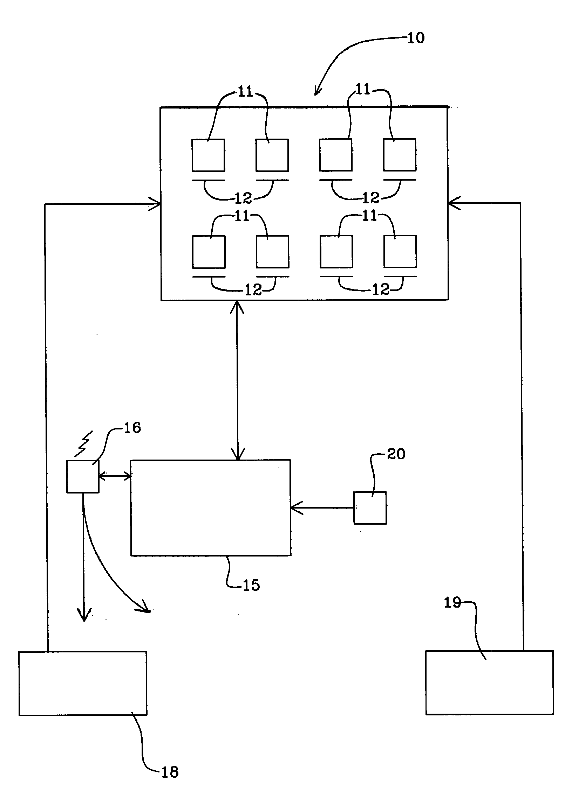

The invention will now be described with reference to the accompanying drawing which is illustrate view of a system which may be operated in accordance with the method of the invention.

Referring to the drawing there is shown an automatic stock replenishment system 10 which includes a plurality of stock keeping units which in the present example are containers such as bins 11 located in a storage area. Each of the bins 11 contain stock items, and each bin may contain a plurality of identical stock items. The bins 11 may all contain the same stock items, or each or at least some of the bins 11 may contain different stock items.

When it is desired to use a stock item, the item is removed from a respective bin. As described in previous patent application number GB-A-2299704, each bin 11 has an associated weighing device 12, so that stock item levels within the bins 11 can be monitored.

The system 10 is controlled by a control apparatus 15. The control apparatus 15 includes one or more processors and memories, so that the stock content within each bin 11 can be computed. To achieve this, the weight of each stock item of each bin is known, and by accounting for the weight of the actual bin 11, the number of stock items within each bin 11 can be calculated by the control apparatus 15, by dividing the weight of each bin 11 by the unit weight. However in another example, the level of stock within each bin 11, or at least within some of the bins 11, may be determined otherwise.

The following stock levels may be identified for each bin, and the number of stock items for these levels may be the same or different for all or some of the bins 11.

There may be a maximum stock level, e.g. when a bin 11 contains the maximum number of stock items it is desired to stock, a stock re-order level at which, as described hereinafter, stock items for a bin may automatically be re-ordered, a minimum stock level below which it is undesirable for the stock level to fall, and an empty bin level in which the bin 11 contains no stock items.

These levels may be set for each stock item depending on the rate of usage of the stock items, determined as hereinafter described and any other factors decided by the system operator including predicted usage.

When the control apparatus 15 determines that a stock level in any bin 11 has reached the re-order level, the control apparatus 15 re-orders the stock items automatically by automatically placing an order, e.g. using a telecommunications device such as modem 16, to communicate with a supplier 18, 19. In the drawings, two suppliers 18, 19 are shown. Whereas any number of suppliers may be contactable for re-ordering various different stock items, for supplying different stock items to different bins 11, in accordance with the invention, the two suppliers 18, 19 indicated are each capable of supplying identical stock items, and are therefore alternative suppliers of the stock items.

In accordance with the invention, the control apparatus 15 is capable of determining the performance of individual suppliers 18, 19 and of automatically placing a re-order for the supply of stock items with a selected one of the suppliers, depending upon at least the past performance of the suppliers 18, 19.

To determine the performance of the suppliers 18, 19, the control apparatus 15 is adapted to collect and store data concerning the suppliers' performances, and in particular data relating to one or more of the following events, namely:-

1. The total number of bins 11 or other containers with stock levels below the re-order level. This determination enables the performance of the stock replenishment system 10 overall to re-order stock items to be taken into account when assessing the performance of the suppliers 18, 19. Thus the control apparatus 15 may be arranged to set higher stock item re-order levels generally when stock items are being used at a faster rate.

2. The time taken in the past for each of the suppliers 18, 19 to replenish the stock level in a bin 11 with a stock level below the re-order level, subsequent to re-order. Thus the efficiency of the suppliers 18, 19 in replenishing stock items may be compared.

3. Where stock levels in a plurality of the bins 11 containing identical stock items or at least stock items sourced from the suppliers 18, 19, are each below a re-order level, how many of the bins 11 are replenished at the next delivery of stock items by a respective supplier 18, 19. Thus the efficiency of a supplier supplying a plurality of different stock items may be determined.

4. The number of containers 11 with respective stock levels below the minimum stock level. This data may be used by the control apparatus 15 in determining an appropriate re-order level for the bins 11, or to determine the efficiency of the supplier 18, 19 in fulfilling re-orders.

5. The time taken for a supplier to replenish the stock level in at least one container 11 in which the stock level is below the minimum stock level.

6. Where stock levels in a plurality of the containers 11 are each below the minimum stock level, how many of the 11 are replenished at the next delivery of stock by the supplier.

7. How many of the containers 11 are out-of-stock i.e. in a stock out condition.

8. The time taken for a supplier to replenish the stock level in at least one container which is out-of-stock.

9. Where a plurality of the containers 11 are each out-of-stock, how many of the containers are replenished at the next delivery of stock items by the supplier.

10. The number of the containers which have stock levels above a maximum stock level. Thus any over-supply by a supplier of stock items may be determined.

11. Where stock in a SKU is rejected, the time taken for a supplier to remove the rejected stock from the SKU or from a quarantine location to which the rejected stock has been moved

12. Where stock is rejected, the number of stock rejections for a particular supplier;

The data which is stored relating to at least one of the above events, and preferably a combination of such events, is subjected to statistical analysis by the control apparatus 15 in order to determine the most efficient supplier 18, 19 of the two or more alternative suppliers.

To collect this data, the control apparatus 15 includes one or more timer means at least to determine the time taken between when a re-order is automatically placed, and replenishment stock is placed in the bin or bins 11.

By applying a statistical analysis to the stored data, performance information may be established for each of the alternative suppliers, and from the performance information, the control apparatus 15 may be adapted automatically to select one of the suppliers. Of course the performance information may continuously be updated in that when re-ordered stock items are delivered by the selected supplier 18, 19, fresh data will be created about the efficiency of the selected supplier 18, 19. Thus a history for the alternative suppliers 18, 19 may be established and taken into consideration by the control apparatus 15 when next selecting a supplier 18, 19 from whom to re-order stock items.

By collecting data for at least some of the events identified above, the control apparatus 15 may readily establish the rate of consumption of different stock items in the bins 11. Thus where it is determined that the rate of usage of stock from any of the bins 11 is below a minimum usage level, the control apparatus 15 may automatically instruct a supplier of the stock to remove at least some of the items of stock from respective bins 11 to avoid the stock becoming obsolete or unusable within a predicted time frame. This may be achieved by the control apparatus 15 communicating with the appropriate supplier 18 or 19 via the telecommunications device 16, or otherwise.

The control apparatus 15 may be arranged to inform the supplier 18 or 19, and each other alternative supplier 19 or 18 for the same stock items, that there is a changing demand for the stock items, so that the suppliers may reduce or increase their manufacturing and/or source fewer or more stock items in the future. Again such communication may use the telecommunications device 16 or another automatic communication means.

The system 10 may be adapted to determine when any item is added to any bin 11 without any re-ordering of stock items for the bin 11 having been placed by the system 10. Thus in the event that a supplier 18, 19 seeks to restock an incorrect bin 11, a warning may be given to permit the error immediately to be remedied.

Where the system 10 is part of a network of systems for example, or otherwise the control apparatus 10 includes data concerning alternative customers for the stock items to be returned, the control apparatus 15 may automatically advise the supplier and any alternative suppliers of the stock to be returned, of the identity of an alternative customer for the stock. Thus the suppliers 18, 19 may dispose of excess stock rather than retaining the stock for the system operator's future use.

To obtain relative performance information of alternative suppliers, the following determinations may be made from analysis of the stored data.

$$\frac{Fu + Sr}{So} = PPM$$

where:

Fu = Forecast usage of particular stock items from supplier
Sr = a buffer stock held by the supplier of the particular stock items;
So = Number of daily stock outs for the stock items for the supplier
PPM = Supplier enabled planned performance measurement to stock outs.

$$\frac{(Au - Fu) + Sr}{So} = UPM$$

where:

Au = Actual stock usage, and is greater than Fu;
UPM = Supplier ability to react to unforeseen circumstances.

In the event that any stock item in a bin 11 is found to be faulty, or otherwise unusable, a message may be sent to the supplier 18, 19 of the stock items, to require the supplier 18, 19 to remove the stock items of the bin from the system 10. The system 10 may quarantine the stock items in their bins 11 to prevent the removal of stock items from a quarantined bin 11, or the system 10 may move the stock items automatically or manually to a quarantined location from which the supplier may remove the stock items.

The control apparatus 15 of the system 10 may record the time taken from issuance of the message to the supplier 18, 19 to remove the stock items to when the stock items are removed from the quarantined bin 11 or quarantined location.

The reasons why the stock has been rejected may also be recorded by the control apparatus 15 and the control apparatus 15 may record the total number of rejections of stock from any one supplier 18, 19 e.g. over time for the one or a plurality of stock items e.g. relevant to a single customer base, which measurement may be used by the control apparatus 15 in selecting suppliers 18, 19 for future orders.

In addition to automatically selecting a supplier 18,19 for re-ordered stock with reference to the performance information, other factors may be taken into account. Thus the apparatus 15 enables data such as stock price, and customer sourcing preferences data for the stock, to be input into the apparatus 10, for example via a manual input means 20 so that the control apparatus 15 may automatically select a supplier 18, 19 from whom stock is to be re-ordered, with reference to the stored customer data.

For example the customer sources preferences data may be indicative of the strategic importance of the stock item to the customer. Thus for a strategically low importance stock items, the control apparatus 15 may select a lower performance but lower cost supplier when placing a re-order, whereas for a higher strategically important stock item, the control apparatus 15 may automatically select a higher cost, but higher performance supplier when placing a stock re-order.

The control apparatus 15 may be adapted to operate integrally with a proof of delivery system whereby when a re-order is fulfilled, the control apparatus 15 may be adapted automatically to acknowledge receipt of the stock, e.g. using the telecommunications device 16, and/or by issuing a printed receipt for a delivery driver. The control apparatus 15 may be adapted to operate integrally with the system operator's accounts system, so that invoices from suppliers are paid automatically after delivery of the stock, and/or where the stock system 10 is intermediate a supplier and an end customer, the control apparatus 15 may be adapted to generate invoices to the end customers when the stock items are received, or as the stock items are used.

The control apparatus 15 may generate management data, such as a tabulated comparison of supplier performance over time; alternative supplier price information; an indication as to when a supplier has failed to deliver stock items within a contracted time from re-order; a measurement of stock usage or where an end customer (or end customers) use a plurality of the stock items to make a product; a measurement of the product usage relative to stock item/product price by end customer and by the total number of end customers for the stock items, to identify the best value for money suppliers 18, 19 by market size for particular end customers' market sector; measurement of product usage (and supplier performance information) by stock item and number of stock items used in the product relative to price, by geographical complexity of serving remote end customer sites, by end customer and total number of end customers to identify the best value for money suppliers 18, 19 for serving such logistical complexity.

Other management data relating to the performance of the automated stock replenishment system 10 may be produced by the control apparatus 15, so that the performance of the system 10 may be monitored, and any discrepancies in supplier performance information checked. The control apparatus 15 may enable a valuation of the stock readily to be made as the control apparatus 15 is aware of the number of and kind of stock items in all of the bins 11 as well as their cost and sales values; and information to be produced relating to remaining shelf life of stock items where applicable.

The system 10 may be arranged to provide other output data to facilitate management of the replenishment system 10. For example the control apparatus 15 may be adapted to measure the rationalisation or expansion of use of stock items over a period of time, e.g. by customer and/or market sector, and/or to compare the actual rate of usage of stock items with a rate forecast from past history; and/or to predict future use patterns of stock items from the bins 11; and/or to compare usage rates of different stock items and to determine any correlation between the increased use of one or more stock items with a decreased usage of another stock items or selection of stock items; and/or to determine any discrepancies between actual stock levels in the bins 11 and expected stock levels determined from re-order information. The control apparatus 15 may determine and adjust re-order criteria such as least one of the re-order level, the minimum stock level, and the maximum stock level of each bin 11, depending upon predicted future trends of stock use. Moreover, the control apparatus 15 may be arranged to learn to improve its predictions of future stock usage trends. The control apparatus 15 may utilise an algorithm to predict future trends of stock use and by comparing historic actual and predicted stock use trends, the algorithm can continuously or intermittently be modifies depending on the results of the comparison to improve future stock use prediction.

The control apparatus 15 may be provided with data from the suppliers 18, 19 such as price data, e.g. using the telecommunications device 16, and additionally data concerning the supplier's availability of stock so that in the event that stock is required which is unavailable from one of the suppliers, the stock may be ordered from an alternative supplier, or part ordered from different suppliers.

The control apparatus 15 may be arranged to provide end customers with planning information such as stock price based on the end customer's orders and the suppliers' stock availability and prices, for each of the alternative stock suppliers 18, 19.

The control apparatus 15 may enable end customers to input end customer preference information in the same way that the system operator may input such information via input device 20. Thus the end customers' preferences are taken into account by the control apparatus 15 when automatically selecting a supplier for stock.

The telecommunications device 16 illustrated in the drawing may be a modem, or a line connection to the Internet or an Intranet or an Extranet or a Virtual Private Network, so that all communications with suppliers 18, 19 and any end customers may be via e-mail, or otherwise over the respective net.

The stock in the bins 11 of the stock replenishment system 10 described may be owned by the system operator, or may be owned by one or more end customers.

When it is desired to discontinue or supercede a particular stock item, the control apparatus 15 may be arranged to disable automatic stock replenishment for the one or more selected bins 11. If desired the control apparatus 15 may be arranged to continue to collect data concerning stock usage.

As mentioned above, if desired, the system 10 may be connected to at least one similar stock replenishment system 10' over a network N to which the control apparatus 15 may also be connected. Common suppliers 18, 19 may supply stock to each or at least some of the networked systems 10, 10' and the control means 15 may use data from each of the networked systems 10, 10' to determine the performance of a supplier 18, 19 to each of the systems 10. 10'. Thus the method of the invention may include determining from the data from each of the networked systems 10. 10' a general level of stock volatility for a particular stock item stored by each of the networked systems 10, 10' as well as overall supplier performance for supplying stock items to all of the networked systems 10, 10'. The control apparatus 15 l determining supplier performance may take into account the relative geography of the suppliers 18, 19 and the networked systems 10. 10', and the quantity of stock items to be supplied to what may be systems 10, 10' of very different capacity.

In the event that stock items have to be returned to a supplier due to a stock level in a bin 11 of one system 10, 10' being greater than the maximum stock level determined for that system 10, 10', the control apparatus 15, may automatically advise the supplier of the stock to be returned of the identity of an alternative customer, e.g. another system 10', 10, for the stock.

Whereas in the description above the stock has been described as being contained in bins 11 in the system 10, 10', it will be appreciated that the stock may otherwise be contained, depending upon the nature of the stock and the volume of stock items in each individual container 11.

Instead of each bin 11 having its own weighing means 12 by means of which the control apparatus 15 is able to monitor stock levels within the bins 11, such monitoring may be achieved using a common weighing means on which the bins 11 may be placed when a stock item is removed, e.g. with the bins 11 being provided on a carousel or conveying arrangement. Moreover instead of the stock levels within the bins 11 being monitored by weighing the containers, other means to determine the number of stock items within the bins 11 may be used such as an optical system which counts when a stock item is placed in or removed from a bin.

It will be appreciated that instead of containers or bins 11 for storing stock items any other kind of stock keeping unit may be utilised in the automatic stock replenishment system

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

**Claims**

1. A method of determining the performance of a supplier of stock utilising an automatic stock replenishment system (10) of the kind which monitors stock levels in a plurality of stock keeping units (SKU's) (11) and automatically re-orders stock when the stock level in any SKU (11) falls below a re-order level, the method including at least one of determining a total number of SKU's (11) with stock levels below the re-order level; and/or determining the time taken for a supplier (18, 19) to replenish the stock level in a SKU (11) with a stock level below the re-order level, subsequent to re-order; and/or where stock levels in a plurality of the SKU's (11) are each below a re-order level, determining how many of the SKU's (11) are replenished at the next delivery of stock items by the supplier (18, 19); and/or determining the number of SKU's with respective stock levels below a minimum stock level which is lower than the re-order level; and/or determining the time taken for a supplier (18, 19) to replenish the stock level in at least one SKU (11) in which the stock level is below a minimum stock level, which is lower than the re-order level; and/or where stock levels in a plurality of the SKU's (11) are each below a minimum stock level, which is lower than the re-order level, determining how many of the SKU's (11) are replenished at the next delivery of stock items by the supplier (18, 19); and/or determining how many of the SKU's (11) are out-of-stock; and/or determining the time taken for a supplier (18, 19) to replenish the stock level in at least one SKU (11) which is out-of-stock; and/or where a plurality of the SKU's (11) are each out-of-stock, determining how many of the SKU's (11) are replenished at the next delivery of stock by the supplier (18, 19); and/or determining the number of the SKU's (11) which have stock levels above a maximum stock level; and/or where stock in a SKU (11) is rejected, the time taken for a supplier (18, 19) to remove the rejected stock from the SKU (11) or from a quarantine location to which the rejected stock has been moved; and/or where stock is rejected, the number of stock rejections for a particular supplier (18, 19); and storing data relating to at least one of the above events, applying statistical analysis to the data.

2. A method according to claim 1 **characterised in that** the method includes determining the performance of a plurality of suppliers (18, 19) of stock to the automatic stock replenishment system (10), comparing the performances of the suppliers (18, 19) for particular stock items, and from performance information determined from the statistical analysis, selecting one supplier (18, 19) in preference to another of the suppliers (18, 19) when automatically re-ordering the particular stock items in the future.

3. A method according to claim 1 or claim 2 **characterised in that** the method includes storing data relating to the rate of stock usage from at least one of the SKU's, (11) and where it is determined that the rate of usage of stock items from at least one of the SKU's (11) is below a minimum usage level, automatically instructing the supplier (18, 19) of the stock to remove at least some of the items of stock to avoid the stock becoming obsolete.

4. A method according to any one of the preceding claims **characterised in that** the method includes determining whether the stock level in any of the SKU's (11) is above a maximum level, and in the event that the stock level in any SKU (11) is determined to be above the maximum stock level, automatically instructing the supplier (18, 19) of the stock to remove at least some of the items of stock.

5. A method according to any one of the preceding claims **characterised in that** the method includes storing historical stock usage information and predicting future trends of stock use.

6. A method according to claim 5 **characterised in that** the method includes adjusting at least one of the re-order level, the minimum stock level, and the maximum stock level of each SKU (11) depending upon predicted future trends of stock use.

7. A method according to claim 5 or claim 6 **characterised in that** the method includes comparing historic actual and predicted stock use trends, and modifying an algorithm used for predicting future trends of stock use depending on the results of the comparison to improve future stock use prediction.

8. A method according to any one of claims 3 to 7 which includes automatically advising suppliers (18, 19) of the stock of a changing demand for the stock.

9. A method according to any one of the preceding claims **characterised in that** the method includes connecting the automatic stock replenishment system (10) to at least one similar stock replenishment system (10') over a network (N) and using data from each of the networked systems (10, 10') to determine the performance of a supplier (18, 19) to each of the systems (10, 10').

10. A method according to claim 9 **characterised in that** in the event that stock is to be returned to a supplier (18, 19) due to a stock level in a SKU (11) of one system (10, 10') being greater than the maximum stock level, the method includes automatically advising the supplier (18, 19) of stock to be returned of the identity of an alternative customer (10, 10') for the stock.

11. A method according to any one of claims 9 or 10 **characterised in that** the method includes determining from data from each of the networked systems (10, 10') a general level of stock volatility for a stock item stored by each of the networked systems (10, 10').

12. A method according to any one of the preceding claims **characterised in that** the method includes storing customer sourcing preferences data for the stock and automatically selecting a supplier (18, 19) from whom stock is to be re-ordered with reference to the stored customer data.

13. A method according to any one of the preceding claims **characterised in that** the method includes disabling automatic stock replenishment for one or more selected SKU's (11) whilst continuing to collect data concerning stock usage.

14. A method according to any one of the preceding claims **characterised in that** the system (10) is adapted to determine when an item is added to any SKU (11) without any re-ordering of stock items for the SKU (11) having been placed by the system (10).

15. A control apparatus (15) for an automatic stock replenishment system (10) of the kind which monitors stock levels in a plurality of stock keeping units (SKU's)(11) and automatically re-orders stock when the stock level in any SKU (11) falls below a re-order level, the control apparatus (15) being adapted to at least one of determine a total number of SKU's (11) with stock levels below the re-order level; and/or to determine the time taken for a supplier (18, 19) to replenish the stock level in a SKU (11) with a stock level below the re-order level, subsequent to re-order; and/or where stock levels in a plurality of the SKU's (11) are each below a re-order level, to determine how many of the SKU's (11) are replenished at the next delivery of stock items by the supplier (18, 19); and/or to determine the number of SKU's (11) with respective stock levels below a minimum stock level which is lower than the re-order level; and/or to determine the time taken for a supplier (18, 19) to replenish the stock level in at least one SKU (11) in which the stock level is below a minimum stock level, which is lower than the re-order level; and/or where stock levels in a plurality of the SKU's (11) are each below a minimum stock level, which is lower than the re-order level, to determine how many of the SKU's (11) are replenished at the next delivery of stock items by the supplier (18, 19); and/or to determine how many of the SKU's (11) are out-of-stock; and/or to determine the time taken for a supplier (18, 19) to replenish the stock level in at least one SKU (11) which is out-of-stock; and/or where a plurality of the SKU's (11) are each out-of-stock, to determine how many of the SKU's (11) are replenished at the next delivery of stock items by the supplier (18, 19); and/or to determine the number of the SKU's (11) which have stock levels above a maximum stock level; and storing data relating to at least one of the above events, applying statistical analysis to the data.